# EUROPEAN PATENT APPLICATION

(11) **EP 4 307 458 A1**
(43) Date of publication of application: **17.01.2024**
(21) Application number: 22818605.2
(22) Date of filing: 26.10.2022
(51) Int. Cl.: H01M 50/531

(54) **BATTERY, BATTERY MODULE, AND BATTERY PACK**

(30) Priority: 02.06.2022 CN 202221374420 U
(71) Applicant: Eve Power Co., Ltd., Jingmen, Hubei 448000 (CN); Huizhou Eve Power Co., Ltd, Tonghu Town, Zhongkai High-tech District Huizhou, Guangdong 516039 (CN)
(72) Inventor: WU, Di, Jingmen, Hubei 448000 (CN); LI, Kaibo, Jingmen, Hubei 448000 (CN); CHEN, Feng, Jingmen, Hubei 448000 (CN); HE, Wei, Jingmen, Hubei 448000 (CN); LIU, Jincheng, Jingmen, Hubei 448000 (CN)
(74) Representative: Murgitroyd & Company
(86) International application number: PCT/CN2022/127716
(87) International publication number: WO 2023/231283

(57) **Abstract**

Embodiments of the present application relate to the field of battery technologies, for example, to a battery, a battery module, and a battery pack. The battery provided in the embodiments of the present application includes a battery cell and an electric connection element. The electric connection element is placed above the battery cell and electrically connected to the battery cell, and the electric connection element is provided with an annular protrusion portion, so that a release space is defined between the electric connection element and the battery cell. By defining the release space between the electric connection element and the battery cell, when the battery cell is charged and expands, the release space can provide an effective gravitational release area for the battery cell, which improves safety of usage of the battery. By adopting the above-mentioned battery, the battery module and the battery pack can provide the effective gravitational release area for the battery cell when they are charged and expands, and improve safety of usage of the battery module and the battery pack.

## Description

### CROSS-REFERENCE TO RELATED APPLICATION

This application claims priority to Chinese Patent Application No. 202221374420.2, filed on June 02, 2022, which is herein incorporated by reference in its entirety.

### TECHNICAL FIELD

The present application relates to the field of battery technologies, for example, to a battery, a battery module, and a battery pack.

### BACKGROUND

For battery users, large cylindrical batteries can reduce quantities of components, and further improve production efficiency and assembly efficiency of the cylindrical batteries. In manufacturing processes of the cylindrical batteries, electric connection elements (such as current collecting plates) are generally placed directly above battery cells, so as to ensure effective connections between the electric connection elements and the battery cells. When the batteries are charged, the battery cells are easy to expand. Since the electric connection elements are closely placed above the battery cells, a danger of explosion may even occur when the electric connection elements are squeezed by the battery cells, which greatly reduces a safety performance of usage of the batteries.

### SUMMARY

The present application provides a battery, which provides an effective gravitational release area for battery cells and improves safety of usage of the battery.

The present application provides a battery module, which provides an effective gravitational release area for the battery cells and improves safety of usage of the battery module.

The present application provides a battery pack, which provides an effective gravitational release area for the battery cells and improves safety of usage of the battery pack.

In a first aspect, a battery is provided in an embodiment of the present application, including:
a battery cell; and
an electric connection element, placed above the battery cell and electrically connected to the battery cell, where the electric connection element is provided with an annular protrusion portion, so that a release space is defined between the annular protrusion portion and the battery cell.

In an embodiment, the electric connection element is recessed towards a direction away from the battery cell to form the annular protrusion portion, so that the release space is defined between the annular protrusion portion and the battery cell.

In an embodiment, the battery further includes:
a terminal pole post, placed on the electric connection element and connected to the electric connection element; and
a lower plastic element, sleeved on an outer periphery of the terminal pole post, where the lower plastic element is supported together by the annular protrusion portion and the terminal pole post.

In an embodiment, the terminal pole post is provided with a connection slot, the electric connection element is provided with a plug-in protrusion, and the plug-in protrusion is inserted into the connection slot.

In an embodiment, an annular avoidance groove is defined on periphery of the lower plastic element, and the annular avoidance groove is lap-jointed on the terminal pole post, so that the lower plastic element is horizontally placed on the annular protrusion portion and the terminal pole post.

In an embodiment, the terminal pole post includes:
a pole post portion; and
a pole plate portion, connected to the pole post portion, where the annular avoidance groove is lap-jointed on the pole plate portion.

In an embodiment, the battery further includes:
a housing, where the battery cell, the electric connection element, and the lower plastic element are all disposed inside the housing, a top cover of the housing is provided with a first through-hole, and the terminal pole post passes through the first through-hole; and
a sealing ring, sleeved on the terminal pole post and sandwiched among the terminal pole post, an inner peripheral wall of the first through-hole, the lower plastic element, and an inner wall of the top cover of the housing.

In an embodiment, one of the sealing ring and the terminal pole post is provided with a first positioning protrusion, another is provided with a first positioning groove, and the first positioning protrusion is capable of being inserted into the first positioning groove; and
one of the sealing ring and the inner wall of the top cover of the housing is provided with a second positioning protrusion, another is provided with a second positioning groove, and the second positioning protrusion is capable of being inserted into the second positioning groove.

In an embodiment, the sealing ring is recessed towards the inner wall of the top cover of the housing to define the first positioning groove, and the second positioning protrusion is formed at a side of the sealing ring towards the inner wall of the top cover of the housing.

In an embodiment, the battery further includes:
an upper plastic element, disposed above the top cover of the housing, where the terminal pole post is capable of passing through the upper plastic element and being bent and flanged outwards to abut against the upper plastic element.

In an embodiment, one of a lower end surface of the upper plastic element and the top cover of the housing is provided with a third positioning protrusion, and another is provided with a third positioning groove, and the third positioning protrusion is capable of being inserted into the third positioning groove.

In a second aspect, a battery module is provided in an embodiment of the present application, including the above-mentioned battery.

In a third aspect, at least one group of the above-mentioned battery module is provided in an embodiment of the present application.

Beneficial effects according to the present application are that:
the battery provided by the present application is provided with the annular protrusion portion on the electric connection element, so that the release space is defined between the electric connection element and the battery cell. When the battery cell is charged and expands, the release space can provide an effective gravitational release area for the battery cell, which avoids a danger of swelling or even explosion of the battery, thereby improving the safety of the usage of the battery.

By adopting the above-mentioned battery in the battery module provided by the present application, when the battery cell is charged and expands, the release space can provide the effective gravitational release area for the battery cell, thereby improving the safety of the usage of the battery module.

By adopting the above-mentioned battery module in the battery pack provided in the present application, when the battery cell is charged and expands, the release space can provide the effective gravitational release area for the battery cell, thereby improving the safety of the usage of the battery pack.

### BRIEF DESCRIPTION OF THE DRAWINGS

FIG. 1 is a first sectional diagram of a battery provided by an embodiment of the present application.
FIG. 2 is a partial enlarged diagram at a portion B in FIG. 1.
FIG. 3 is a second sectional diagram of the battery provided by the embodiment of the present application.
FIG. 4 is a partial enlarged diagram at a portion A in FIG. 3.
FIG. 5 is a schematic structural diagram of an upper plastic element provided by the embodiment of the present application.

### Reference numerals:

1, upper plastic element; 11, accommodating slot; 111, second through-hole; 12, third positioning protrusion; 13, annular plug-in protrusion; 2, terminal pole post; 21, pole post portion; 211, connection slot; 22, sealing flange; 23, pole plate portion; 231, first positioning protrusion; 3, housing; 31, first through-hole; 32, third positioning groove; 33, second positioning groove; 4, sealing ring; 41, first positioning groove; 42, second positioning protrusion; 5, lower plastic element; 51, annular avoidance groove; 6, electric connection element; 61, annular protrusion portion; 62, release space; 63, plug-in protrusion; 7, battery cell.

### DETAILED DESCRIPTION OF THE EMBODIMENT

In the description of the present application, unless otherwise specified and limited, the terms "link", "connect" or "fix" are to be construed in a broad sense, for example, as fixedly connected, detachably connected, or integrated; mechanically connected or electrically connected; directly connected to each other or indirectly connected to each other via an intermediary; or internally connected between two elements or interacted between two elements. Meanings of the preceding terms in the present application may be understood according to situations by an ordinary person in the art.

In the present application, unless otherwise specified and limited, when a first feature is described as "on" or "below" a second feature, the first feature and the second feature may be in direct contact, or be in contact via another feature between the two features instead of being in direct contact. Moreover, when the first feature is described as "on", "above" or "over" the second feature, the first feature is right on, above or over the second feature or the first feature is obliquely on, above or over the second feature, or the first feature is simply at a higher level than the second feature. When the first feature is described as "under", "below" or "underneath" the second feature, the first feature is right under, below or underneath the second feature, or the first feature is obliquely under, below or underneath the second feature, or the first feature is simply at a lower level than the second feature.

In the description of the embodiment, terms indicating orientation or location relationships such as "up", "down", "left", and "right" are based on orientation or location relationships shown in drawings, which are only for a convenience of description and simplified operation, rather than indicating or implying that devices or elements referred to must have a specific orientation, be constructed and operated in a specific orientation, so it cannot be understood as a limitation of the present application. In addition, terms "first" and "second" are only used to distinguish in terms of description and have no special meanings.

In manufacturing processes of cylindrical batteries, electric connection elements (such as current collecting plates) are generally placed directly above battery cells, so as to ensure effective connections between the electric connection elements and the battery cells. When the batteries are charged, the battery cells are easy to expand. Since the electric connection elements are closely placed above the battery cells, a danger of explosion may even occur when the electric connection elements are squeezed by the battery cells, which greatly reduces a safety performance of usage of the batteries.

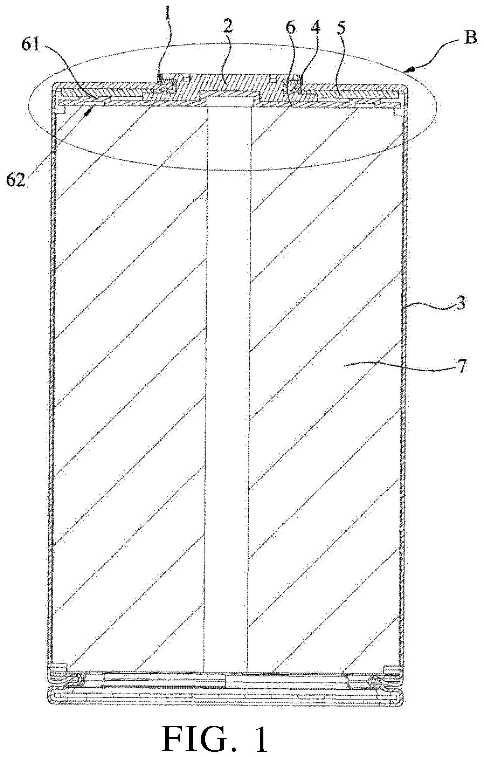

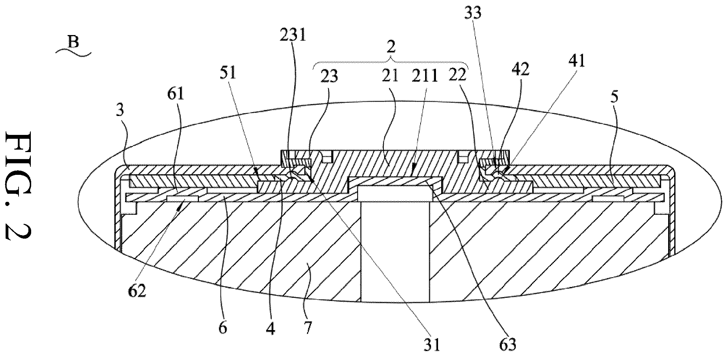

As shown in FIG. 1 and FIG. 2, a battery is provided in an embodiment to solve the above-mentioned problem. The battery may be a cylindrical battery, including a battery cell 7 and an electric connection element 6. The electric connection element 6 is placed above the battery cell 7 and electrically connected to the battery cell 7, and the electric connection element 6 is provided with an annular protrusion portion 61, so that a release space 62 is defined between the electric connection element 6 and the battery cell 7. When the battery cell 7 is charged and expands, the release space 62 can provide an effective gravitational release area for the battery cell 7, which avoids a danger of swelling or even explosion of the battery, thereby improving safety of usage of the battery.

For example, as shown in FIG. 2, the electric connection element 6 is recessed towards a direction away from the battery cell 7 to form the annular protrusion portion 61, so that the release space 62 is defined between the annular protrusion portion 61 and the battery cell 7. By recessing the electric connection element 6 to form the annular protrusion portion 61, it can not only ensure that the release space 62 is defined between the electric connection element 6 and the battery cell 7, but also enhance structural strength of the electric connection element 6 and facilitate processing of the electric connection element 6.

In addition, as shown in FIG. 2, the battery further includes a terminal pole post 2 and a lower plastic element 5. The terminal pole post 2 is placed on the electric connection element 6 and connected to the electric connection element 6, the lower plastic element 5 is sleeved on an outer periphery of the terminal pole post 2, and the lower plastic element 5 is supported together by the annular protrusion portion 61 and the terminal pole post 2.

For example, as shown in FIG. 2, an annular avoidance groove 51 is defined on periphery of the lower plastic element 5, and the annular avoidance groove 51 is lap-jointed on the terminal pole post 2, so that the lower plastic element 5 is horizontally placed on the annular protrusion portion 61 and the terminal pole post 2. On a premise of ensuring the safety of the battery, the above-mentioned design makes an internal structure of the entire battery more flat and compact.

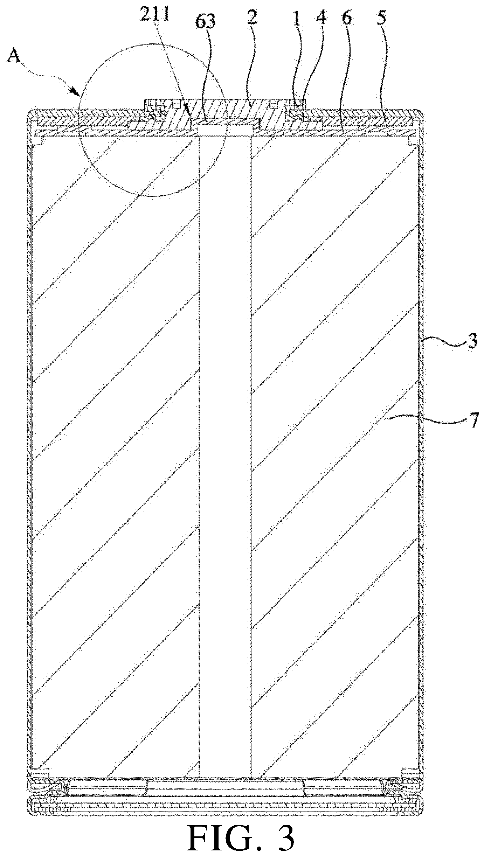

For example, as shown in FIG. 2 and FIG. 3, a connection slot 211 is defined on a side of the terminal pole post 2 facing the electric connection element 6, and a plug-in protrusion 63 is provided on a side of the electric connection element 6 facing the terminal pole post 2. The plug-in protrusion 63 is inserted into the connection slot 211, so as to realize an electrical connection between the terminal pole post 2 and the electric connection element 6, and improve stability and reliability of the connection between the terminal pole post 2 and the electric connection element 6.

In addition, as shown in FIG. 2, the battery further includes a housing 3 and a sealing ring 4. The battery cell 7, the electric connection element 6, and the lower plastic element 5 are all disposed inside the housing 3, a top cover of the housing 3 is provided with a first through-hole 31, and the terminal pole post 2 passes through the first through-hole 31. The sealing ring 4 is sleeved on the terminal pole post 2, and sandwiched among the terminal pole post 2, an inner peripheral wall of the first through-hole 31, the lower plastic element 5, and an inner wall of the top cover of the housing 3. By designing the sealing ring 4, a sealing effect between the terminal pole post 2 and the housing 3 can be improved, and the terminal pole post 2 can further be separated from the housing 3, which ensures an insulation characteristic between the terminal pole post 2 and the housing 3.

For example, in the embodiment, the sealing ring 4 and the lower plastic element 5 may be an integral element, which is not only convenient for processing, but also simplifies quantities of components, and is more convenient for assembling the entire battery.

In the embodiment, as shown in FIG. 2, the terminal pole post 2 completely passes through the first through-hole 31, which maximizes an overlapping height between the terminal pole post 2 and the first through-hole 31, further reduces a height at a location of the top cover of the housing 3, and is conducive to improving a volume energy density of the battery.

For example, as shown in FIG. 2, a lower end surface of the sealing ring 4 is provided with a first positioning groove 41, the terminal pole post 2 is provided with a first positioning protrusion 231, and the first positioning protrusion 231 can be inserted into the first positioning groove 41, thereby ensuring that the sealing ring 4 can be more quickly and accurately sleeved on the terminal pole post 2 to achieve positioning and installation. In addition, an upper end surface of the sealing ring 4 is provided with a second positioning protrusion 42, the inner wall of the top cover of the housing 3 is provided with a second positioning groove 33, and the second positioning protrusion 42 can be inserted into the second positioning groove 33, so as to achieve accurate installation between the sealing ring 4 and the top cover of the housing 3. The above-mentioned design make installation among the sealing ring 4, the terminal pole post 2, and the top cover of the housing 3 more accurate, and further improve stability of a connection. In other embodiments, the first positioning groove 41 may be defined on the terminal pole post 2, the first positioning protrusion 231 is disposed on the lower end surface of the sealing ring 4, the second positioning groove 33 is disposed on the upper end surface of the sealing ring 4, and the second positioning protrusion 42 is disposed on the inner wall of the top cover of the housing 3. It should be noted that both the first positioning protrusion 231 and the second positioning protrusion 42 are annular, and correspondingly, both the first positioning groove 41 and the second positioning groove 33 are annular.

In the embodiment, the sealing ring 4 is recessed towards the inner wall of the top cover of the housing 3 to define the first positioning groove 41, and the second positioning protrusion 42 is formed at a side of the sealing ring 4 towards the inner wall of the top cover of the housing 3. The above-mentioned design can not only facilitate processing of the sealing ring 4, but also makes a structure of the sealing ring 4 more compact.

In addition, as shown in FIG. 3 to FIG. 5, the battery further includes an upper plastic element 1. The upper plastic element 1 is disposed above the top cover of the housing 3. The terminal pole post 2 can pass through the first through-hole 31 and the upper plastic element 1 in sequence, and be bent and flanged outwards to abut against the upper plastic element 1, so that the upper plastic element 1 and the top cover of the housing 3 are firmly wrapped by the terminal pole post 2 to achieve a sealing effect, which ensures stability and reliability of a connection among the terminal pole post 2, the upper plastic element 1, and the top cover of the housing 3. The upper plastic element 1, the sealing ring 4, and the lower plastic element 5 cooperate with each other to completely separate the terminal pole post 2 from the housing 3, which ensures an insulation characteristic between the terminal pole post 2 and the housing 3.

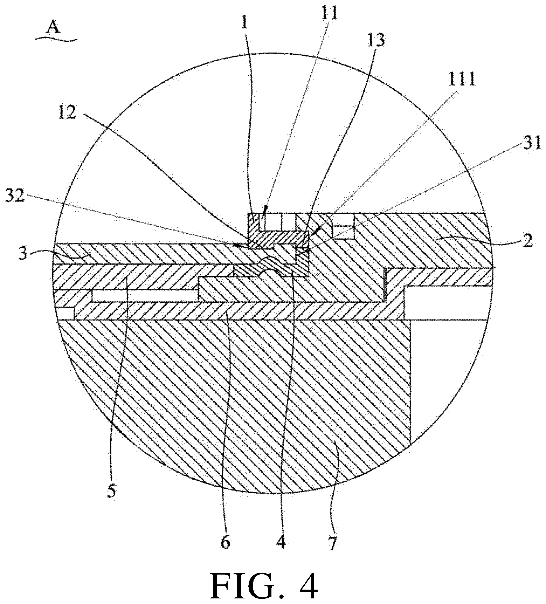

To ensure that the upper plastic element 1 is more accurately and stably placed on the top cover of the housing 3, as shown in FIG. 4 to FIG. 5, a lower end surface of the upper plastic element 1 is provided with a third positioning protrusion 12, the top cover of the housing 3 is provided with a third positioning groove 32, and the third positioning protrusion 12 can be inserted into the third positioning groove 32, so as to ensure that the upper plastic element 1 is more accurately positioned on the top cover of the housing 3, and ensure that a connection between the upper plastic element 1 and the top cover of the housing 3 is more reliable and stable. In other embodiments, the lower end surface of the upper plastic element 1 may further be provided with the third positioning groove 32, and the top cover of the housing 3 may be provided with the third positioning protrusion 12.

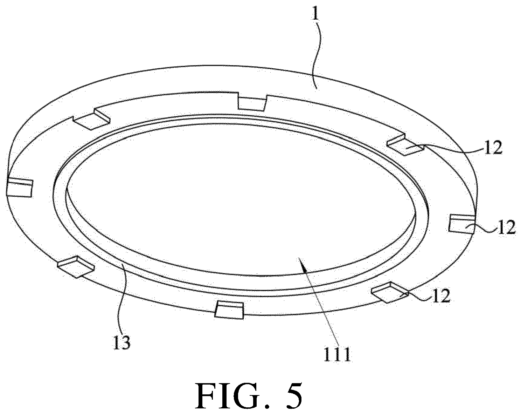

For example, as shown in FIG. 5, a plurality of third positioning protrusions 12 are disposed on periphery of the upper plastic element 1 at intervals. Each of the third positioning protrusions 12 corresponds to one third positioning groove 32, which improves reliability and stability of a connection between the upper plastic element 1 and the top cover of the housing 3.

In the embodiment, as shown in FIG. 4 and FIG. 5, the lower end surface of the upper plastic element 1 is provided with an annular plug-in protrusion 13, and the annular plug-in protrusion 13 is sandwiched between the terminal pole post 2 and an inner peripheral wall of the first through-hole 31, and contacts the sealing ring 4 between the terminal pole post 2 and the inner peripheral wall of the first through-hole 31, thereby improving reliability and sealing of a connection among the upper plastic element 1, the terminal pole post 2, and the top cover of the housing 3.

As shown in FIG. 4, an upper top surface of the upper plastic element 1 is provided with an accommodating slot 11, and a bottom wall of the accommodating slot 11 is provided with a second through-hole 111. The terminal pole post 2 can pass through the first through-hole 31 and the second through-hole 111 in sequence, be bent and flanged outwards to abut against the bottom wall of the accommodating slot 11, thereby ensuring the stability and the reliability of the connection among the terminal pole post 2, the top cover of the upper plastic element 1, and the housing 3.

A specific structure of the terminal pole post 2 will be described in combination with FIG. 2. As shown in FIG. 2, the terminal pole post 2 includes a pole post portion 21, a pole plate portion 23, and a sealing flange 22. The pole plate portion 23 is connected to the pole post portion 21, and is located below the sealing ring 4 and the lower plastic element 5. The annular avoidance groove 51 is lap-jointed on the pole plate portion 23, and the sealing flange 22 is connected to the pole plate portion 23 and disposed opposite to the pole plate portion 23, disposed on periphery of the pole post portion 21, and bent outwards relative to the pole post portion 21 and the pole plate portion 23, and the sealing flange 22 abuts against the bottom wall of the accommodating slot 11. In the embodiment, the pole post portion 21, the pole plate portion 23, and the sealing flange 22 are integrally formed, which simplifies a manufacturing process of the terminal pole post 2, thereby reducing manufacturing cost of the terminal pole post 2. In addition, the pole plate portion 23 is provided with the first positioning protrusion 231, and the pole post portion 21 is provided with the connection slot 211 on a side towards the electric connection element 6.

A battery module is provided in an embodiment. By adopting the above-mentioned battery, when the battery cell 7 is charged and expands, an effective gravitational release area can be provided for the battery cell 7, which improves safety of usage of the battery module.

A battery pack is provided in an embodiment, including at least one group of the above-mentioned battery modules. When the battery cell 7 is charged and expands, the effective gravitational release area can be provided for the battery cell 7, which improves safety of usage of the battery pack.

## Claims

1. A battery, comprising:
a battery cell (7); and
an electric connection element (6), placed above the battery cell (7) and electrically connected to the battery cell (7), wherein the electric connection element (6) is provided with an annular protrusion portion (61), so that a release space (62) is defined between the annular protrusion portion (61) and the battery cell (7).

2. The battery of claim 1, wherein the electric connection element (6) is recessed towards a direction away from the battery cell (7) to form the annular protrusion portion (61), so that the release space (62) is defined between the annular protrusion portion (61) and the battery cell (7).

3. The battery of claim 2, further comprising:
a terminal pole post (2), placed on the electric connection element (6) and connected to the electric connection element (6); and
a lower plastic element (5), sleeved on an outer periphery of the terminal pole post (2), wherein the lower plastic element (5) is supported together by the annular protrusion portion (61) and the terminal pole post (2).

4. The battery of claim 3, wherein the terminal pole post (2) is provided with a connection slot (211), the electric connection element (6) is provided with a plug-in protrusion (63), and the plug-in protrusion (63) is inserted into the connection slot (211).

5. The battery of claim 3, wherein an annular avoidance groove (51) is defined on periphery of the lower plastic element (5), and the annular avoidance groove (51) is lap-jointed on the terminal pole post (2), so that the lower plastic element (5) is horizontally placed on the annular protrusion portion (61) and the terminal pole post (2).

6. The battery of claim 5, wherein the terminal pole post (2) comprises:
a pole post portion (21); and
a pole plate portion (23), connected to the pole post portion (21), wherein the annular avoidance groove (51) is lap-jointed on the pole plate portion (23).

7. The battery of any one of claims 3-6, further comprising:
a housing (3), wherein the battery cell (7), the electric connection element (6), and the lower plastic element (5) are all disposed inside the housing (3), a top cover of the housing (3) is provided with a first through-hole (31), and the terminal pole post (2) passes through the first through-hole (31); and
a sealing ring (4), sleeved on the terminal pole post (2) and sandwiched among the terminal pole post (2), an inner peripheral wall of the first through-hole (31), the lower plastic element (5), and an inner wall of the top cover of the housing (3).

8. The battery of claim 7, wherein one of the sealing ring (4) and the terminal pole post (2) is provided with a first positioning protrusion (231), another is provided with a first positioning groove (41), and the first positioning protrusion (231) is capable of being inserted into the first positioning groove (41); and
one of the sealing ring (4) and the inner wall of the top cover of the housing (3) is provided with a second positioning protrusion (42), another is provided with a second positioning groove (33), and the second positioning protrusion (42) is capable of being inserted into the second positioning groove (33).

9. The battery of claim 8, wherein the sealing ring (4) is recessed towards the inner wall of the top cover of the housing (3) to define the first positioning groove (41), and the second positioning protrusion (42) is formed at a side of the sealing ring (4) towards the inner wall of the top cover of the housing (3).

10. The battery of claim 7, further comprising:
an upper plastic element (1), disposed above the top cover of the housing (3), wherein the terminal pole post (2) is capable of passing through the upper plastic element (1) and being bent and flanged outwards to abut against the upper plastic element (1).

11. The battery of claim 10, wherein one of a lower end surface of the upper plastic element (1) and the top cover of the housing (3) is provided with a third positioning protrusion (12), another is provided with a third positioning groove (32), and the third positioning protrusion (12) is capable of being inserted into the third positioning groove (32).

12. A battery module, comprising the battery of any one of claims 1-11.

13. A battery pack, comprising at least one group of the battery module of claim 12.
